# EUROPEAN PATENT SPECIFICATION

(11) **EP 3 918 894 B1**
(45) Date of publication and mention of the grant of the patent: **21.08.2024**
(21) Application number: 19912662.4
(22) Date of filing: 27.12.2019
(51) Int. Cl.: A01B 69/04, G05D 1/00

(54) **AUTONOMOUS TRAVEL SYSTEM FOR WORK VEHICLE**
AUTOMATISCHES FAHRSYSTEM FÜR NUTZFAHRZEUGE
SYSTÈME DE DÉPLACEMENT AUTONOME POUR VÉHICULE DE TRAVAIL

(30) Priority: 31.01.2019 JP 2019015896
(43) Date of publication of application: 08.12.2021
(73) Proprietor: Yanmar Power Technology Co., Ltd., Osaka-shi Osaka 530-8311 (JP)
(72) Inventor: YUKI, Hidehiro, Osaka-shi, Osaka 530-8311 (JP); NISHINO, Mitsuya, Osaka-shi, Osaka 530-8311 (JP); SHINTAI, Toshinobu, Osaka-shi, Osaka 530-8311 (JP); IWAMURA, Keisuke, Osaka-shi, Osaka 530-0014 (JP); NAKAMURA, Shoichi, Osaka-shi, Osaka 530-0014 (JP)
(74) Representative: Dennemeyer & Associates S.A.
(86) International application number: PCT/JP2019/051587
(87) International publication number: WO 2020/158296

(56) References cited:
- WO-A1-2018/101351
- WO-A1-2018/116770
- JP-A- 2014 045 685
- JP-A- 2018 117 560
- JP-A- 2018 198 552
- US-A1- 2020 064 144
- US-A1- 2020 064 863

## Description

### TECHNICAL FIELD

The present invention relates to an autonomous travel system for a work vehicle.

### BACKGROUND ART

Conventionally, a configuration capable of executing a vehicle speed maintenance control (automatic cruise control) to maintain a vehicle speed of a work vehicle at a predetermined vehicle speed is known. As this type of configuration, Patent Document 1 discloses a speed maintaining mechanism.

The speed maintaining mechanism of Patent Document 1 is configured so that the motor of the continuously variable transmission device, which is driven and operated by the acceleration operating tool and when the speed maintaining mechanism is in operation, the driving is stopped, and at an arbitrary speed the speed operating tool operates speed maintenance and deactivation of speed maintenance. Patent Literature 2 discloses a work vehicle automatic traveling system for a plurality of work vehicles that carry out work travel cooperatively in a work site while exchanging data.

### CITATION LIST

### Patent Literature

Patent Literature 1: Japanese Unexamined Patent Application Publication No. 2004-262417
Patent Literature 2 : WO 2018/116770 A1

### DISCLOSURE OF INVENTION

### PROBLEMS TO BE SOLVED BY THE INVENTION

In recent years, a work vehicle capable of autonomously traveling along a target path has been developed. Some such work vehicles are configured so that, during autonomous travel, steering operation along the target path is performed automatically, but the traveling vehicle speed is subject to user operation. In such a work vehicle, it is conceivable to apply a vehicle speed maintenance control as shown in Patent Document 1.

However, in a work vehicle capable of autonomous travel along a target path allowing the use of vehicle speed maintenance control during autonomous travel without restriction is not necessarily desirable compared to a case where the user performs the steering operation by themself.

The present invention has been made in consideration of the above circumstances, and its object is to provide an autonomous travel system for a work vehicle capable of vehicle speed maintenance control in consideration of a user's sense of security and the like.

### MEANS FOR SOLVING THE PROBLEMS

### EFFECT OF THE INVENTION

The problem to be solved by the present invention is as described above, and the means for solving the problem and the effect thereof will be described in the following.

According to an aspect of the present invention as defined in claim 1, an autonomous travel system for a work vehicle is provided. That is, this autonomous travel system for a work vehicle includes an autonomous travel control unit. The autonomous travel control unit, using a positioning system, is capable of causing autonomous traveling of the work vehicle along a travel path having a plurality of work paths along which work is performed by the work section and a turning path connecting adjacent work paths among the plurality of work paths. The work vehicle includes a vehicle speed control unit that controls a vehicle speed of the work vehicle and a vehicle speed operation unit for performing operations on the vehicle speed of the work vehicle. The vehicle speed control unit is capable of executing a vehicle speed maintenance control that, even after release of an operation force on the vehicle speed operation unit, maintains the vehicle speed of the work vehicle corresponding to an operating position of the vehicle speed operation unit before the release. The autonomous travel control unit permits the vehicle speed maintenance control by the vehicle speed control unit when the work vehicle is caused to autonomously travel along the work path, and prohibits the vehicle speed maintenance control by the vehicle speed control unit when the work vehicle is caused to autonomously travel along the turning path.

As a result, when the work vehicle is autonomously traveling on a turning path, the execution of the vehicle speed maintenance control is prohibited, so that the user themself determines the vehicle speed when the work vehicle is turning. Therefore, careful and deliberate turning can be ensured. In addition, the work vehicle generally does not work by the work section when traveling along the turning path, so a decrease in productivity can be avoided.

In the autonomous travel system for a work vehicle, the following configuration is preferable. That is, the autonomous travel control unit prohibits the vehicle speed maintenance control by the vehicle speed control unit in a section from a predetermined point a predetermined distance before an end point of the work path to the end point, even when the work vehicle is caused to autonomously travel along the work path.

When the work vehicle is traveling along the work path, the vehicle speed maintenance control is prohibited from a predetermined point where the remaining distance to the turning path is short, which means that the user manually determines the vehicle speed from a stage before the turning path is reached. Accordingly, the user's sense of security is improved when the work vehicle turns in the turning path.

In the autonomous travel system for a work vehicle, the following configuration is preferable. That is, the vehicle speed maintenance control is in a state of being executed by the vehicle speed control unit, when the work vehicle is being caused to autonomously travel along the work path with the and when the position of the work vehicle reaches the predetermined point, the autonomous travel control unit controls the vehicle speed control unit which causes the work vehicle to decelerate and afterwards to stop.

When the autonomous traveling work vehicle reaches a predetermined point, the vehicle speed maintenance control is deactivated. By controlling the deceleration of the work vehicle at this time, for example, sudden stops can be avoided and comfort when riding can be improved.

In the autonomous travel system for a work vehicle, the following configuration is preferable. That is, the autonomous travel control unit is capable of causing the work vehicle to start autonomously travelling along the work path when an autonomous travel start condition is satisfied. The autonomous travel start condition includes that the vehicle speed maintenance control is not being performed by the vehicle speed control unit.

If autonomous travel is allowed to start while the vehicle speed maintenance control is being executed, the work vehicle may change course at a high speed depending on the positional relationship between the point where the scheduled start point of autonomous travel along the travel path and the current position of the work vehicle. By prohibiting the start of autonomous travel during the execution of the vehicle speed maintenance control, the work vehicle can move to the scheduled point described above while reliably following the user's instructions for the vehicle speed.

In the autonomous travel system for a work vehicle, the following configuration is preferable. That is, the autonomous travel system of the work vehicle is provided with an autonomous travel operation unit. That is, the autonomous travel system of the work vehicle is provided with an autonomous travel operation unit. An autonomous travel operation unit is capable of commanding a start and a termination of autonomous travel of the work vehicle to the autonomous travel control unit. While the vehicle speed maintenance control is in a state of being executed by the vehicle speed control unit, and when the work vehicle is caused to autonomously travel along the work path, the autonomous travel control unit controls the vehicle speed control unit to cause the work vehicle to decelerate and afterwards to stop when the autonomous travel operation unit is operated to give a command to terminate the autonomous travel to the autonomous travel control unit.

If the vehicle speed maintenance control is maintained, the work vehicle may proceed to a point that the user does not intend, if the user instructs end of autonomous travel while the vehicle speed maintenance control is being executed and the autonomous travel is being performed in the work path. In this regard, in the configuration described above, it is possible to stop the work vehicle at a position close to the position at the time when the user instructs the end of the autonomous travel.

In the autonomous travel system for a work vehicle, the following configuration is preferable. That is, the autonomous travel control unit controls the vehicle speed control unit to limit the vehicle speed of the work vehicle to a predetermined upper vehicle speed limit or less when the work vehicle is caused to autonomously travel along the turning path regardless of an operation amount of the vehicle speed operation unit.

Because an upper limit is set for the vehicle speed of the work vehicle in the turning path, the stability when riding can be improved.

In the autonomous travel system for a work vehicle, the following configuration is preferable. That is, when the work vehicle autonomously traveling along the turning path has switched to the work path, the autonomous travel control unit prevents acceleration of the work vehicle by the vehicle speed control unit until a predetermined condition is satisfied. The predetermined condition is that the vehicle speed operation unit is operated to the deceleration side.

When a work vehicle shifts from a turning path to a work path, the work vehicle may accelerate against the user's intention if the upper limit of vehicle speed applied in the turning path is deactivated. In this regard, according to the configuration described above, in order for a work vehicle that has shifted to a work path to accelerate, it is necessary to explicitly operate the vehicle speed operation unit once to the deceleration side and then to the acceleration side. Therefore, the user can have a high sense of security regarding acceleration.

### BRIEF DESCRIPTION OF DRAWINGS

FIG. 1 is a side view of a rice transplanter used in an autonomous travel system for a work vehicle according to an embodiment of the present invention.
FIG. 2 is a plan view of a rice transplanter.
FIG. 3 is a skeleton diagram showing the power transmission configuration of a rice transplanter.
FIG. 4 is a functional block diagram of a rice transplanter and a wireless communication terminal.
FIG. 5 is a diagram showing an example of an autonomous travel path generated by a path generation unit of a wireless communication terminal.
FIG. 6 is a flowchart showing the processing of determining whether autonomous control of the work section is being executed.
FIG. 7 is a flowchart of autonomous control of the work section.
FIG 8 is a diagram showing a part of the autonomous travel path.
FIG. 9 is a flowchart showing the process of determining whether automatic cruise control is being executed.
FIG. 10 is a flowchart of vehicle speed control including automatic cruise control.

### DESCRIPTION OF EMBODIMENTS

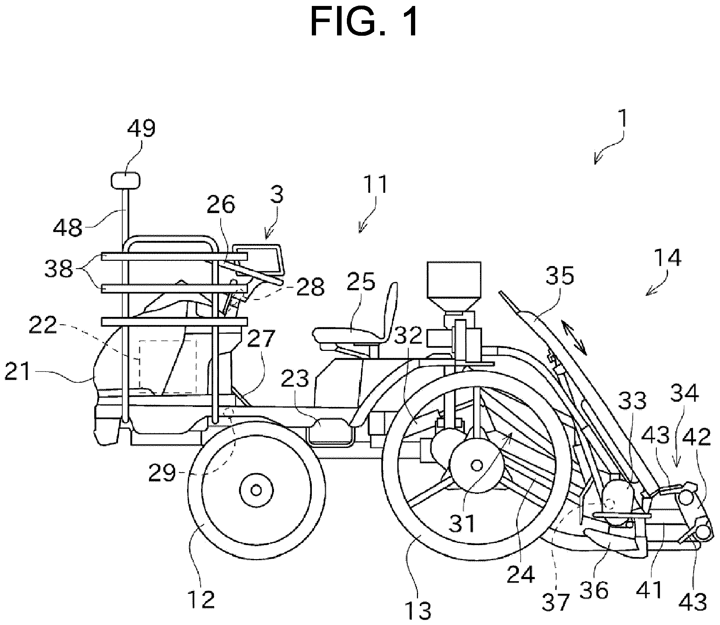

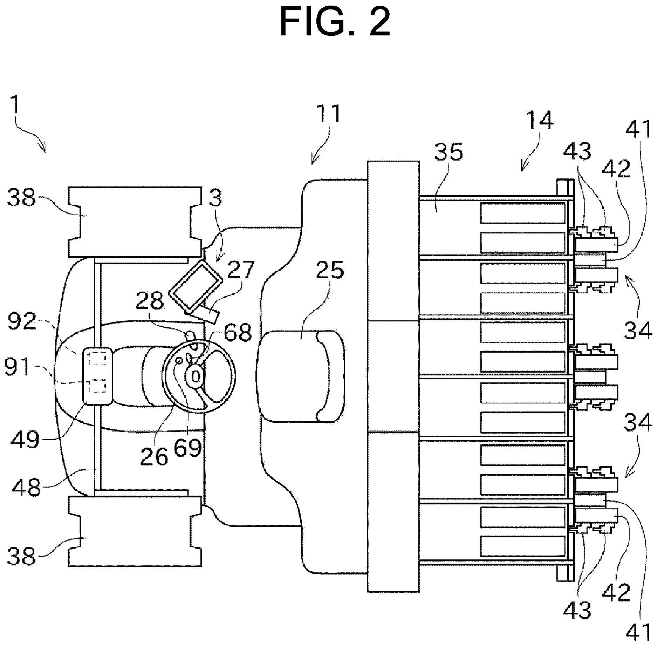

Next, an embodiment of the present invention will be described with reference to the accompanying drawings. FIG. 1 is a side view of the rice transplanter 1. FIG. 2 is a plan view of the rice transplanter 1.

An autonomous travel system for a work vehicle according to one embodiment of the present invention includes a rice transplanter 1 shown in FIG. 1 as a work vehicle capable of autonomous travel. In this embodiment, a rice transplanter is used as the work vehicle, but it is not limited to this; for example, a tractor or combine harvester can be used.

The autonomous travel system includes a wireless communication terminal 3 that can remotely operate the rice transplanter 1. In this embodiment, the wireless communication terminal 3 is mounted at an appropriate position in the rice transplanter 1 so that the user can operate the rice transplanter 1 while riding the rice transplanter 1. However, the wireless communication terminal 3 can be removed from the rice transplanter 1 and carried by the user.

The rice transplanter 1 is capable of performing planting work by planting seedlings in a field. As shown in FIGs. 1 and 2, a rice transplanter 1 includes a vehicle body section 11, a front wheel 12, a rear wheel 13, and a planting section 14 (work section). The front wheels 12 and the rear wheels 13 are each provided in pairs on the left and right sides of the vehicle body section 11.

In this configuration, the vehicle body section 11 is a traveling body of the rice transplanter 1. The vehicle body section 11 is provided with an engine 22 and a transmission case 23. The engine 22 is supported in the front part of the vehicle body section 11. The transmission case 23 is mounted in the lower part of the vehicle body section 11.

The driving power of the engine 22 is shifted by the transmission case 23 and transmitted to the front wheels 12 and rear wheels 13. The driving power of the engine 22 is transmitted to the planting section 14 through the transmission case 23 and the PTO shaft 24 placed at the rear of the vehicle body section 11.

By transmitting the driving power of the engine 22 to the front wheels 12 and the rear wheels 13, the vehicle body section 11 can travel in a field or the like. The planting section 14 is capable of performing the work of planting seedlings in the field by being transmitted to the driving of the engine 22.

The vehicle body section 11 is provided with a driver's seat 25 and a plurality of operation members. The driver's seat 25 is placed between the front wheels 12 and the rear wheels 13 in the front-rear direction of the vehicle body section 11. A user can sit in the driver's seat 25.

The plurality of operation members includes a steering handle 26, an acceleration pedal 27 (vehicle speed operation unit), a planting elevation lever 28, a work section autonomous control on/off switch 69 (operating part) described below, and an automatic cruise lever 68 (vehicle speed maintenance operating part).

The steering handle 26 is mounted on a steering column placed in front of the driver's seat 25. A user of the rice transplanter 1 can instruct the vehicle body section 11 (rice transplanter 1) to go straight or turn by grasping and turning the steering handle 26 with the hand.

An acceleration pedal 27 is provided projecting upwardly from the floor on the front side of the driver's seat 25. The acceleration pedal 27 is rotatably supported at a suitable point of the vehicle body section 11. The user can operate the acceleration pedal 27 by depressing it with their foot. A return spring, shown in the figure, is attached to the acceleration pedal 27 for returning the acceleration pedal 27 when the user releases the depression of the acceleration pedal 27.

By depressing the acceleration pedal 27, the user can instruct the vehicle body section 11 (rice transplanter 1) to travel. By changing the depth to which the user depresses the acceleration pedal 27 with the foot, the user can indicate acceleration/deceleration of the vehicle body section 11 (indicating the vehicle speed). On the other hand, the user can instruct the rice transplanter 1 to stop traveling by releasing their foot from the acceleration pedal 27.

In the vehicle body section 11, a pedal sensor 29 capable of detecting an operating position of the acceleration pedal 27 is provided in an appropriate place relative to the acceleration pedal 27. The pedal sensor 29 can be configured as a potentiometer, for example.

As shown in FIG. 1 and the like, the planting section 14 is placed at the rear of the vehicle body section 11. The planting section 14 is capable of planting seedlings in the field. The planting section 14 is connected to the vehicle body section 11 via a raising-and-lowering link mechanism 31.

A raising-and-lowering cylinder 32 is provided between the vehicle body section 11 and the planting section 14. By telescopically driving the raising-and-lowering cylinder 32, the planting section 14 can be raised and lowered vertically with respect to the vehicle body section 11. An actuator other than a cylinder may be used to raise and lower the planting section 14.

The planting section 14 can be raised and lowered between a lowered position where planting work is performed and a raised position where planting work is not performed. The lowered position is a position at which the planting jaws 43 described below are in a state in which the seedlings can be planted in the field. The raised position is a position where the raising-and-lowering cylinder 32 has raised the planting section 14 sufficiently relative to the vehicle body section 11.

The planting section 14 includes a planting input case section 33, a plurality of planting units 34, a seedling loading table 35, and a plurality of floats 36. The planting section 14 can sequentially supply seedlings to each planting unit 34 from the seedling loading table 35 and continuously plant the seedlings.

Each planting unit 34 has a planting transmission case section 41 and a rotary case section 42. Power is transmitted to the planting transmission case section 41 via the PTO shaft 24 and the planting input case section 33.

The rotary case section 42 is rotatably mounted to the planting transmission case section 41. The rotary case section 42 is placed on both sides of the planting transmission case section 41 in the vehicle width direction. Two planting jaws 43 are mounted on one side of each rotary case section 42.

The two planting jaws 43 are displaced as the rotary case section 42 rotates. The displacement of the two planting jaws 43 results in the planting of one set of seedlings.

The seedling loading table 35 is placed above the front of the plurality of planting units 34. A seedling mat can be placed on the seedling loading table 35. The seedling loading table 35 is capable of supplying seedlings of the seedling mat placed on the seedling loading table 35 to each of the planting units 34.

Specifically, the seedling loading table 35 is configured to be laterally movable (slidable in the lateral direction) so as to reciprocate in the vehicle width direction. The seedling loading table 35 is configured to intermittently vertically feed and transport a seedling mat downward at a reciprocating and moving end of the seedling loading table 35.

The float 36 is pivotably provided at the bottom of the planting section 14. The lower surface of the float 36 can make contact with the surface of the field to stabilize the planting attitude of the planting section 14 with respect to the surface of the field.

The float 36 is provided with a float sensor 37 that detects the attitude of the float 36. The float sensor 37 can be configured as a potentiometer, for example.

The prepared seedling stands 38 are provided in a pair on the left and right sides in relation to the vehicle body section 11. The prepared seedling stands 38 are mounted on the outer side of the bonnet 21 in the vehicle width direction. The prepared seedling stands 38 can be used to mount a seedling box containing prepared mat seedlings.

The upper portions of the left and right prepared seedling stands 38 are connected to each other by a connecting frame 48 extending in the vertical direction and the vehicle width direction. A communications housing 49 is provided in the center of the vehicle width direction of the connecting frame 48. An antenna 91 for positioning and an antenna 92 for wireless communication, to be described later, are provided inside the communications housing 49.

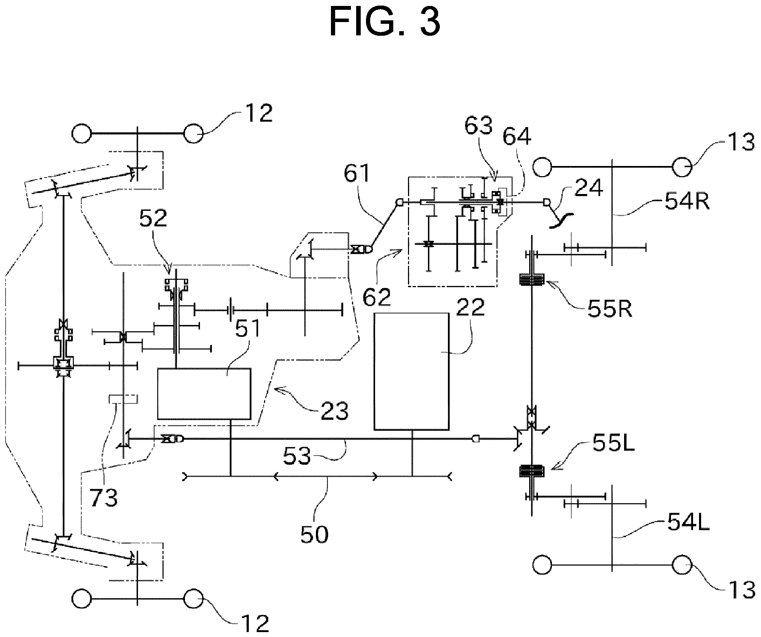

The drive transmission path in the rice transplanter 1 will now be described with reference to FIG. 3. FIG. 3 is a skeleton diagram showing a power transmission configuration of a rice transplanter 1.

As shown in FIG. 3, the driving force of the engine 22 is input to the transmission case 23 via the drive transmission belt 50. A hydraulic mechanical continuously variable transmission (HMT) 51 is provided inside the transmission case 23, and the driving force of the engine 22 is continuously shifted by this hydraulic mechanical continuously variable transmission 51. The gear ratio of the hydraulic mechanical stepless transmission 51 can be changed by the user operating the acceleration pedal 27.

The output of the hydraulic mechanical continuously variable transmission 51 is transferred from the transmission case 23 via the main clutch 52. The output of the hydraulic mechanical continuously variable transmission 51 is transmitted to the front wheels 12. The output of the hydraulic mechanical continuously variable transmission 51 is transmitted to the rear wheels 13 via the propeller shaft 53. As a result, the front wheels 12 and rear wheels 13 are driven.

A left side clutch 55L is provided in the drive transmission path from the propeller shaft 53 to the left rear axle 54L. In addition, a right side clutch 55R is provided in the drive transmission path from the propeller shaft 53 to the right rear axle 54R.

The left and right side clutches 55L, 55R are configured to be independently switched between engagement and disengagement by the control unit 30, respectively. That is, in the present embodiment, the rice transplanter 1 can individually switch whether or not to transmit driving force to the left and right rear wheels 13, 13.

The left and right side clutches 55L, 55R are provided with left and right side clutch sensors, respectively. The detection results of the left and right side clutch sensors can be used to detect the engagement and disengagement of the left and right side clutches 55L, 55R.

The output of the hydraulic mechanical continuously variable transmission 51 is taken from the transmission case 23 and transmitted to the PTO shaft 24 via the planting drive transmission shaft 61 and the planting transmission section 62. The planting section 14 is driven by the driving force of the PTO shaft 24.

The power of the PTO shaft 24 is input to the planting input case section 33 of the planting section 14. The drive power input to the planting input case section 33 is transmitted to the drive shaft of the rotary case section 42 through a plurality of transmission shafts and a plurality of transmission gears and the like.

As described above, the rotary case section 42 can be rotatably driven by the power of the engine 22. Therefore, the seedlings can be planted by the planting unit 34 configured as a rotary planting device.

As shown in FIG. 3, the planting transmission section 62 is equipped with a transmission comprising a plurality of gears. The speed at which the rotary case section 42 of the planting section 14 is rotatably driven can be changed by the transmission. This makes it possible to change the interval at which the planting section 14 plants seedlings in the field (distance between seedlings).

A planting clutch 63 (work clutch) is provided in the planting transmission section 62. By engaging the planting clutch 63, the planting section 14 can be driven. By disengaging the planting clutch 63, the driving of the planting section 14 can be stopped.

The planting clutch 63 can be switched between engagement and disengagement by the control unit 30. The planting clutch 63 can also be switched between engagement and disengagement by a user operating an operation member (planting clutch operation lever), which is not shown in the figure.

The planting clutch 63 is provided with a planting clutch sensor 64. The detection result of the planting clutch sensor 64 can be used to detect the engagement and disengagement of the planting clutch 63.

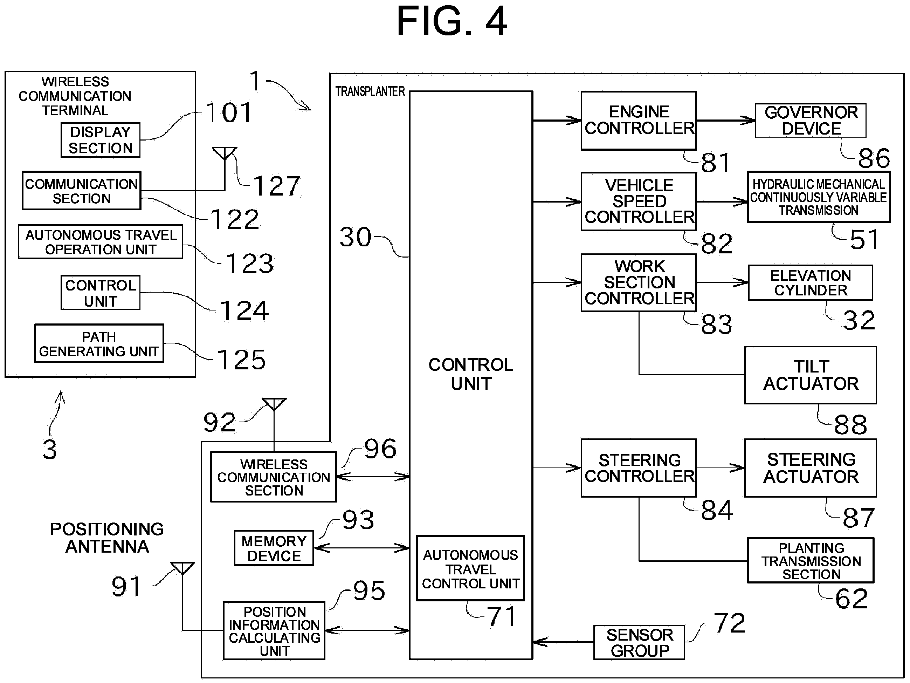

Next, the control unit 30 included in the rice transplanter 1 of this embodiment will be described with reference to FIG. 4. FIG. 4 is a functional block diagram of a rice transplanter 1 and a wireless communication terminal 3.

The control unit 30 is configured as a publicly known computer and includes a CPU, ROM, RAM, input/output section, etc. as shown in the figure. The CPU can read and execute various programs, etc. from the ROM. Various programs and data are stored in the ROM. As shown in FIG. 4, the control unit 30 includes an autonomous travel control unit 71 which can operate as an autonomous travel control unit 71 by cooperation of the hardware and software.

The control unit 30 is electrically connected to the sensor group 72. The sensor group 72 includes the pedal sensor 29, the float sensor 37, the left and right side clutch sensors and the planting clutch sensor 64. The sensor group 72 includes a vehicle speed sensor 73 described below, a work section autonomous control on/off switch 69, and an operation detection switch, or the like, of the automatic cruise lever 68.

The control unit 30 can detect the operating position (depressed amount) of the acceleration pedal 27 by the detection result of the pedal sensor 29. The control unit 30 is capable of setting the gear ratio of the hydraulic mechanical continuously variable transmission 51 according to the operating position of the acceleration pedal 27.

The control unit 30 can detect the raising-and-lowering position of the planting section 14 by the detection result of the float sensor 37. For example, the control unit 30 can detect a change of the planting section 14 from the lowered position to the raised position and a change of the planting section 14 from the raised position to the lowered position.

The control unit 30 can acquire the engaged state/disengaged state of the left and right side clutches 55L, 55R by the detection results of the left and right side clutch sensors. This allows the control unit 30 to detect the start and end of a turn of the vehicle body section 11 (rice transplanter 1).

The control unit 30 can acquire the engaged state/disengaged state of the planting clutch 63 by the detection result of the planting clutch sensor 64. This allows the control unit 30 to detect the drive state/driving stopped state.

The control unit 30 can acquire a vehicle speed and a traveling distance of the rice transplanter 1 by the detection result of the vehicle speed sensor 73. A vehicle speed sensor 73 is provided on the axle of the front wheel 12 so that the rotation of the axle can be detected. The vehicle speed sensor 73 can be provided at another suitable location of the rice transplanter 1.

The control unit 30 is electrically connected to a plurality of controllers that control each configuration (e.g., the engine 22, etc.) included in the rice transplanter 1. In this embodiment, the plurality of controllers includes an engine controller 81, a vehicle speed controller (vehicle speed control unit) 82, a work section controller 83, and a steering controller 84.

The engine controller 81 controls the number of rotations of the engine 22. The engine 22 is provided with a governor device 86 equipped with an abbreviated actuator for changing the rotation speed of the engine 22. The engine controller 81 can control the governor device 86 based on the control signal input from the control unit 30 to control the speed of the engine 22.

The vehicle speed controller 82 controls the vehicle speed of the rice transplanter 1. The vehicle speed controller 82 can change the angle of the movable swash plate of the hydraulic mechanical continuously variable transmission 51 based on the control signal input from the control unit 30 by means of an actuator (not shown) to change the gear ratio of the hydraulic mechanical stepless transmission 51 to achieve the vehicle speed desired by the user.

The control of vehicle speed by the vehicle speed controller 82 includes automatic cruise control (vehicle speed maintenance control). The automatic cruise control is a control to run the rice transplanter 1 at a predetermined vehicle speed even when the foot is taken off the acceleration pedal 27.

The automatic cruise control is initiated by the operation of the automatic cruise lever 68 shown in FIG. 2 while the rice transplanter 1 is running. The automatic cruise lever 68 can be operated to the ON side or to the OFF side. The automatic cruise lever 68 is provided with a return spring (not shown), and when no operating force is applied to the automatic cruise lever 68, the automatic cruise lever 68 is in an intermediate position that is neither ON nor OFF.

The vehicle speed during automatic cruise control is set based on the operating position of the acceleration pedal 27 at the time the automatic cruise lever 68 is operated to the ON side. The automatic cruise control can be ended by operating the automatic cruise lever 68 to the OFF side. Further, the automatic cruise control is automatically ended by depressing the acceleration pedal 27.

The work section controller 83 controls the elevation of the planting section 14. The work section controller 83 telescopically drives the elevation cylinder 32 based on the control signal input from the control unit 30 to raise and lower the planting section 14 accordingly. The work section controller 83 can change the elevation position (height position) of the planting section 14 to a lowered position or a raised position, or the like.

The work section controller 83 also controls the left-and-right tilting attitude of the planting section 14. The work section controller 83 can operate the tilt actuator 88 based on a control signal input from the control unit 30 to control the planting section 14 to be horizontal.

The steering controller 84 can control the steering angle of the front wheels 12. In this embodiment, the steering controller 84 drives the steering actuator 87 based on the control signal input from the control unit 30 to control the turning angle of the steering handle 26 and thus the steering angle of the front wheels 12.

In detail, a steering actuator 87 is provided at the midpoint of the steering shaft of the steering handle 26. With this configuration, when the rice transplanter 1 travels along a predetermined path, the control unit 30 calculates an appropriate turning angle of the steering handle 26 so that the rice transplanter 1 travels along the path, and outputs a control signal to the steering controller 84. Then, the steering controller 84 controls the steering angle of the front wheels 12 by changing the turning angle of the steering handle 26 with the steering actuator 87.

Further, the steering controller 84 is configured to be able to control the rotation of the PTO shaft 24. The steering controller 84 switches the engaged state and disengaged state of the planting clutch 63 of the planting transmission section 62 based on a control signal input from the control unit 30. As a result, the transmission/shutdown of power to the PTO shaft 24 can be controlled to drive or stop the planting section 14.

Aplurality of controllers, such as the engine controller 81 described above, control each part of the engine 22 and the like based on signals input from the control unit 30. Accordingly, it can be said that the control unit 30 controls, in effect, each of the configurations included as the rice transplanter 1.

The control unit 30 is configured to allow the user to select whether to execute the autonomous control of the work section with respect to the planting section 14 by operating the work section autonomous control on/off switch 69. The autonomous control of the work section detects the start of a turn of the rice transplanter 1 (disengagement of the left and right side clutches 55L or 55R), automatically raises the planting section 14 and disengages the planting clutch 63, and detects the end of the turn of the rice transplanter 1 (shifting side clutches 55L or 55R in the disengaged state to the engaged state), autonomously lowers the planting section 14 and engages the planting clutch 63. This eliminates the need for a series of operations when turning the vehicle between operations, thus enhancing user convenience.

The work section autonomous control on/off switch 69 can be alternately switched between the ON state and the OFF state by the user's finger pressing operation. In this embodiment, the work section autonomous control on/off switch 69 is placed near the steering handle 26 as shown in FIG. 2.

The control unit 30 executes the autonomous control of the work section when the work section autonomous control on/off switch 69 is in the ON state. The control unit 30 does not execute the autonomous control of the work section when the work section autonomous control on/off switch 69 is in the OFF state.

Thus, the rice transplanter 1 equipped with the control unit 30 as described above can perform planting work using the planting section 14 while traveling in a field by the control unit 30 controlling each part of the rice transplanter 1 (planting section 14, etc.) through various operations by a user riding the vehicle body section 11. Additionally, the rice transplanter 1 can autonomously travel and work based on a predetermined control signal output by the wireless communication terminal 3.

Specifically, as shown in FIG. 4, the rice transplanter 1 includes various configurations to enable autonomous travel. For example, the rice transplanter 1 is equipped with an autonomous travel control unit 71 of the control unit 30, as well as an antenna and the like necessary for acquiring its own position information based on a positioning system. With this configuration, the rice transplanter 1 is capable of autonomously traveling in the field while acquiring its own position information using a positioning system.

Next, a detailed description will be given of the configuration for enabling autonomous travel of the rice transplanter 1. As shown in FIGs. 2 and 4, the rice transplanter 1 includes a positioning antenna 91, a wireless communication antenna 92, and a memory device 93. In addition to these, the rice transplanter 1 may include an inertial measurement unit (IMU) that is capable of acquiring the posture (roll angle, pitch angle, yaw angle) of the vehicle body section 11.

The positioning antenna 91 can receive signals from positioning satellites that comprise a positioning system, such as a satellite positioning system (GNSS), for example. The positioning signals received by the positioning antenna 91 are input to the position information calculating unit 95 shown in FIG. 4. The position information calculating unit 95 calculates the position information of the rice transplanter 1 as, for example, latitude and longitude information. The position information calculated by the position information calculating unit 95 is input to the control unit 30 and is used for autonomous travel of the rice transplanter 1 by the autonomous travel control unit 71.

In this embodiment, a high-precision satellite positioning system using the GNSS-RTK method is used as the positioning system, but this embodiment is not limited to this and other positioning systems may be used as long as high-precision position coordinates can be obtained. For example, a relative positioning system (DGPS) or a geostationary satellite navigation augmentation system (SBAS) may be used as the positioning system.

The wireless communication antenna 92 is capable of receiving a signal from the wireless communication terminal 3 operated by the user and transmitting a signal to the wireless communication terminal 3. The signal from the wireless communication terminal 3 received by the wireless communication antenna 92 is signal-processed by the wireless communication section 96 illustrated in FIG. 4 and then input to the control unit 30. Further, the signal transmitted from the control unit 30, etc., to the wireless communication terminal 3 is signal-processed by the wireless communication section 96 and then transmitted from the wireless communication antenna 92 to be received by the wireless communication terminal 3.

The memory device 93 is capable of storing a travel path (path) along which the rice transplanter 1 travels, in which autonomous travel of the rice transplanter 1 takes place, the movement (traveling trajectory) of the position of the rice transplanter 1 during travel. In addition, the memory device 93 stores various information necessary that makes the rice transplanter 1 travel autonomously and work autonomously. The memory device 93 includes for example, a non-volatile memory such as a flash memory or a hard disk.

The wireless communication terminal 3 is configured as a computer that can be carried by a user, for example a tablet-type personal computer. The user is capable of confirming information about the rice transplanter 1, and the like, by referring to the information displayed on the display portion (display) 101 of the wireless communication terminal 3. The user can also operate an operation unit (for example, a touch panel provided in the display unit 101) of the wireless communication terminal 3 to send a control signal to the control unit 30 of the rice transplanter 1 for controlling the rice transplanter 1. This control signal may be, for example, a signal indicating the start or end of autonomous travel of the rice transplanter 1.

The rice transplanter 1 configured in this way is controlled based on the instructions of a user using the wireless communication terminal 3, and can perform planting work using the planting section 14 while autonomously traveling along a travel path in a field.

Next, the configuration of the wireless communication terminal 3 will be described with reference to FIG. 4.

As shown in FIG. 4, the wireless communication terminal 3 has, in addition to the aforementioned display section 101, a communication section 122, an autonomous travel operation unit 123, a control unit 124, and a path generating unit 125.

The communication section 122 is configured to be, for example, a wireless communication module. The communication section 122 is electrically connected to the communication antenna 127. The communication antenna 127 has an antenna for short-range communication for wireless communication with the rice transplanter 1, and a mobile communication antenna for communication using a mobile phone line and the Internet. The communication section 122 can transmit and receive data to and from the rice transplanter 1 or other devices by performing modulation or demodulation processing in a suitable manner.

The autonomous travel operation unit 123 is configured as, for example, a touch panel, and is included in the operation unit of the wireless communication terminal 3 described above. The autonomous travel operation unit 123 can instruct the autonomous travel control unit 71 (control unit 30) in the rice transplanter 1 to start and end autonomous travel.

The wireless communication terminal 3 is configured as a publicly known computer, and includes a CPU, ROM, RAM, and input/output section, etc. as shown in the figure. The CPU can read and execute various programs, etc. from the ROM. In addition, various programs and data are stored in the ROM. Then, by the cooperation of the above-described software and hardware, the wireless communication terminal 3 can be operated as the control unit 124, the path generating unit 125, and the like.

By communicating with the control unit 30 of the rice transplanter 1 by the communication section 122, the control unit 124 can transmit to the rice transplanter 1 information of the autonomous travel path generated by the path generating unit 125. The control unit 124 can transmit the commands from the autonomous travel operation unit 123 to the autonomous travel control unit 71 in the rice transplanter 1 via the communication section 122. Further, when the rice transplanter 1 is traveling autonomously, the control unit 124 can receive the status (position, vehicle speed, etc.) of the rice transplanter 1 from the rice transplanter 1 and display it on the display 101.

The path generating unit 125 is capable of generating a travel path (autonomous travel path) along which the rice transplanter 1 performs autonomous travel, based on field information, aircraft information, and the like. The field information includes information on the shape of the field, information on the autonomous travel start position, and information on the autonomous travel direction. The information on the shape of the field is identified, for example, by a user manually operating the rice transplanter 1 to run along the perimeter of the field before the rice transplanter 1 starts traveling autonomously, and based on the movement trajectory at that time. In the following, the travel described above may be referred to as field shape specific travel. The information of the autonomous travel start position and the information of the autonomous travel direction are designated by the user when the autonomous travel path is generated using the wireless communication terminal 3. Although the method of designation is not particularly limited, for example, the user can designate an arbitrary position in the trajectory as the autonomous travel start position with the movement trajectory of the field shape specific traveling displayed on the display section 101. As the autonomous travel orientation, two arbitrary points in the moving trajectory of the field shape-specific traveling displayed on the display section 101 can be designated by the user as an orientation in a straight line connecting the two points.

The machine information includes, for example, a front/rear vehicle length and a left/right vehicle width of the entire rice transplanter 1 including the vehicle body section 11 and the planting section 14, a distance from the positioning antenna 91 in the positioning system to the working center of the planting section 14, a turning radius of the rice transplanter 1, and other information indicating a maximum number of planting rows by the planting section 14. The autonomous travel path generated by the path generating unit 125 of the wireless communication terminal 3 is then input (transferred) to the memory device 93 of the rice transplanter 1. At this time, information on the positional relationship between the antenna 91 for positioning and the working center of the planting section 14 is also transmitted from the wireless communication terminal 3 to the rice transplanter 1. This allows the control unit 30 (autonomous travel control unit 71) of the rice transplanter 1 to know the working center position of work of the planting section 14.

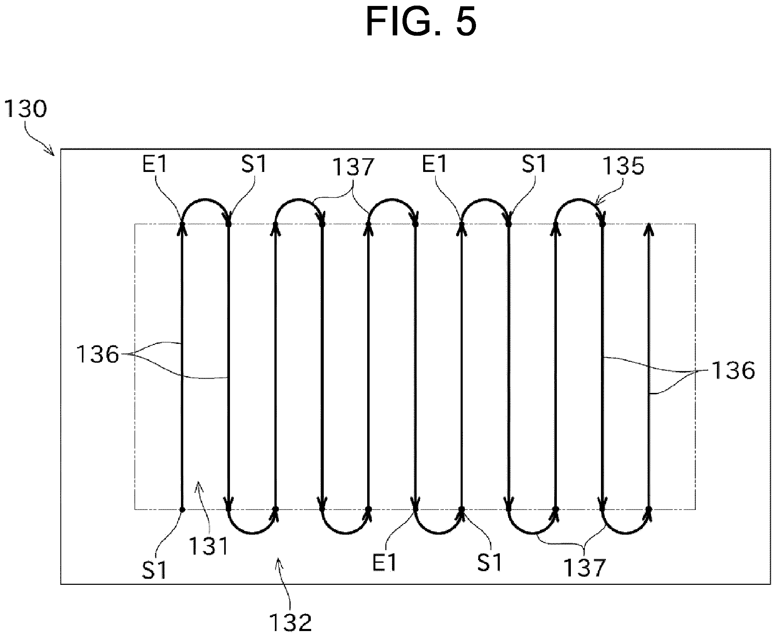

FIG. 5 shows an example of an autonomous travel path generated by the path generating unit 125. As shown in FIG. 5, the field 130 can be divided into a central region 131 and a peripheral region 132 surrounding the periphery of the central region 131. The width of the peripheral region 132 is determined based on the field information and the aircraft information described above.

In a central region 131 of the field 130, a reciprocal path is generated in which planting operations are performed by the planting section 14. The reciprocal path has a plurality of work paths 136. Each of the work paths 136 extend in a straight line so that the rice transplanter 1 travels in a straight line.

In the peripheral region 132 of the field 130, a turning path 137 is generated that connects an end point on one side (end terminus) E1 of a work path 136 of the plurality of adjacent work paths 136 and a start point (beginning terminus) S1 of another work path 136.

In this way, the autonomous travel path generated by the path generating unit 125 has a plurality of work paths 136 and a plurality of turning paths 137, and connects, in an alternating manner, work paths 136 and turning paths 137 as appropriate.

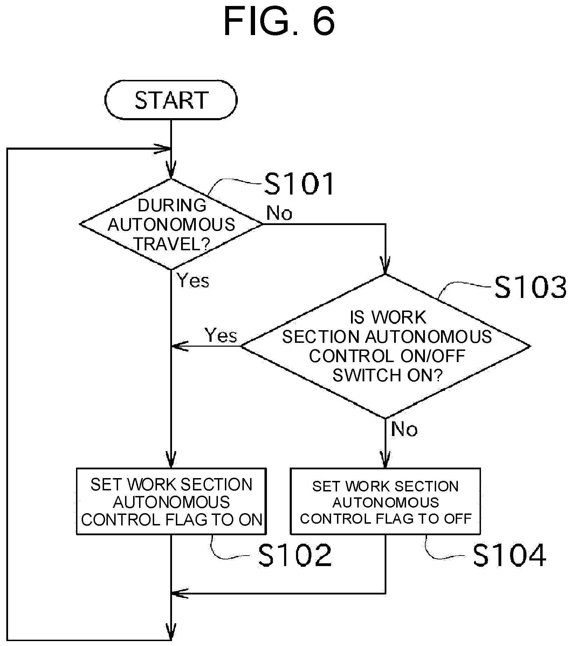

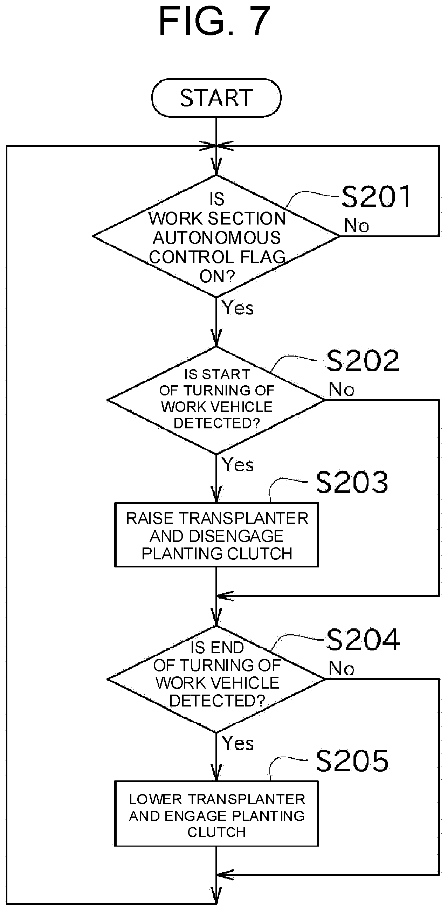

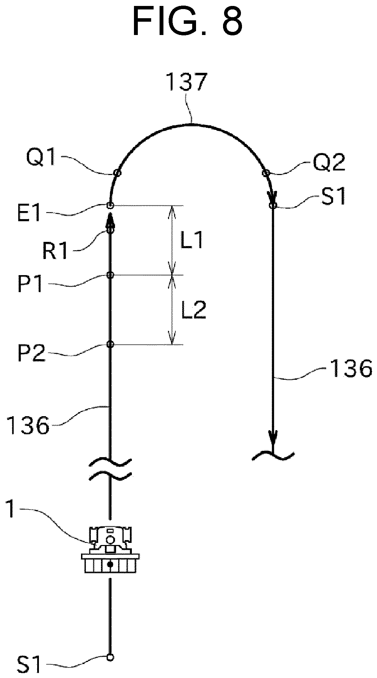

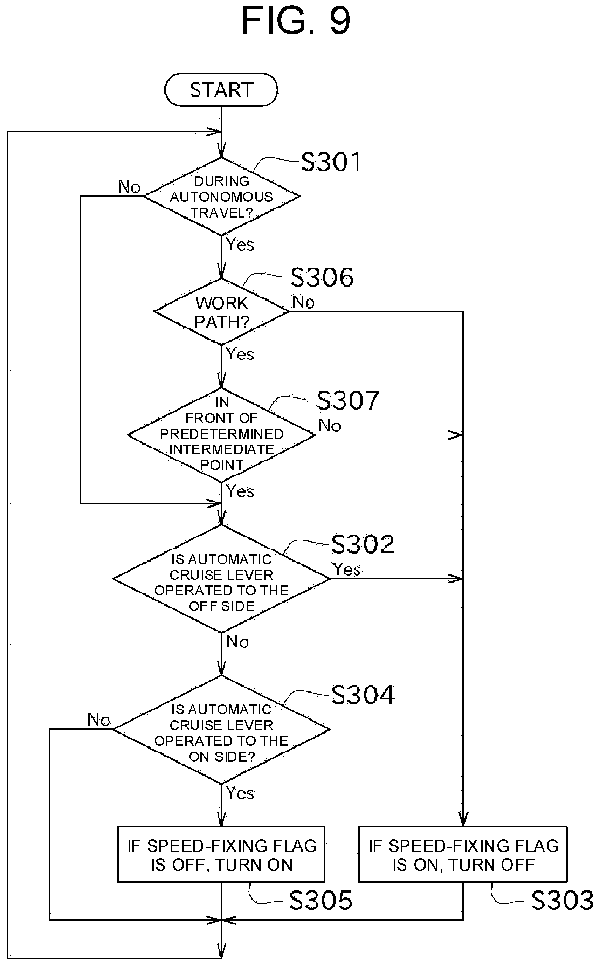

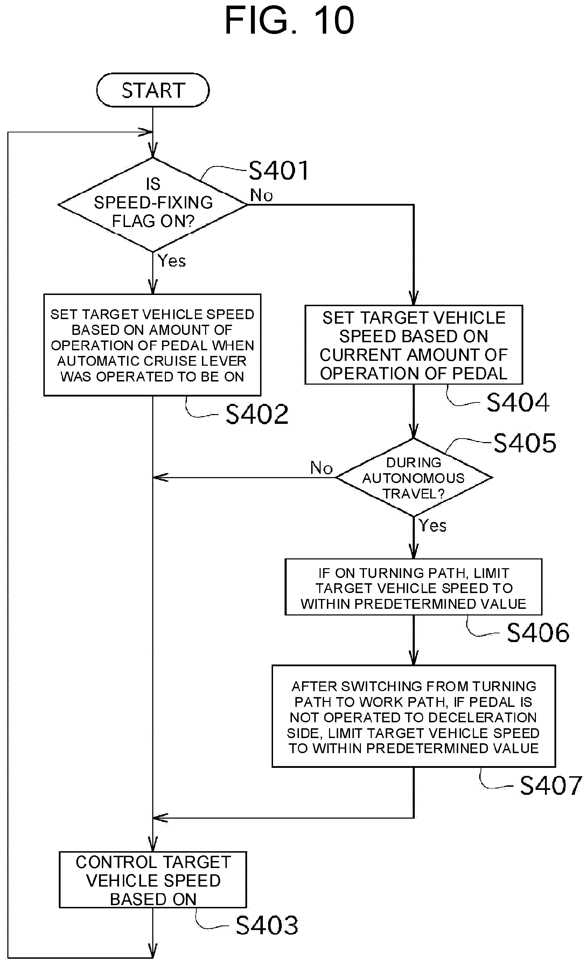

Next, the process when the rice transplanter 1 performs autonomous travel will be described with reference to FIGs. 6 to 10. FIG. 6 is a flowchart showing the process of determining if autonomous control of the work section is or is not being executed. FIG. 7 is a flowchart of the autonomous control of the work section. FIG. 8 is a diagram showing a portion of the autonomous travel path. FIG. 9 is a flowchart showing the process of determining if automatic cruise control is or is not being executed. FIG. 10 is a flowchart of vehicle speed control including automatic cruise control.

In the present embodiment, the autonomous travel of the rice transplanter 1 is started by being instructed to start autonomous travel by the wireless communication terminal 3 to the rice transplanter 1.

However, the autonomous travel control unit 71 determines whether the predetermined autonomous travel start condition has been satisfied before actually starting the autonomous travel. This autonomous travel start condition is satisfied when all of the following conditions are satisfied.
(1) Path search is complete.
(2) The steering angle is within a predetermined range with respect to the working direction of the rice transplanter 1.
(3) The traveling part of the rice transplanter 1 is in neutral.
(4) The parking brake of the rice transplanter 1 is OFF.
(5) The steering operation flag is OFF.
(6) The speed-fixing flag is OFF.
(7) No abnormality related to automatic planting has occurred.
However, this is an example, and some conditions may be omitted or other conditions may be added.

Here, "path search is complete" means that the rice transplanter 1 has identified any of the plurality of work paths 136 as a work path 136 that is a path to start autonomous travel. For example, the rice transplanter 1 identifies, among the starting points S1 of each work path 136, the work path 136 to which the starting point S1 closest to the position of the rice transplanter 1 belongs as a path to start autonomous travel.

The term "the traveling part of the rice transplanter 1 is in neutral" means that the main clutch 52 shown in FIG. 3 is disengaged. For example, in the rice transplanter 1, the main clutch 52 is disengaged and the traveling section of the rice transplanter 1 is put into neutral by the user operating the main gear shift lever, which is not shown in the figure, to the neutral position.

The "steering operation flag is OFF" means that the steering handle 26 is not manually operated by the user. The steering operation flag is data stored in the control unit 30 and represents whether or not the steering handle 26 is being manually operated. When the steering operation flag is ON, it means that the steering handle 26 is being manually operated, and when the steering operation flag is OFF, it means that the steering handle 26 is not being manually operated. The status of the steering operation flag is updated as needed.

The "speed-fixing flag is OFF" means that the automatic cruise control is not being executed. The speed-fixing flag is data stored in the control unit 30 and indicates if the automatic cruise control is or is not being executed. When the speed-fixing flag is ON, it means that automatic cruise control is being executed, and when the speed-fixing flag is OFF, it means that the automatic cruise control is not being executed. The status of the speed-fixing flag is changed at any time as described below.

The term "no abnormality related to automatic planting has occurred" means that no abnormality has occurred that would interfere with the raising and lowering of the planting section 14 or the engagement and disengagement of the planting clutch 63 of the planting transmission section 62. In the event of a failure of the elevation cylinder 32, a failure of the planting clutch 63, or the like, autonomous travel of the rice transplanter 1 is not permitted. Even if an abnormality related to horizontal control of the planting section 14 occurs in the work section controller 83, the spring mechanism provided in the rice transplanter 1 can level the planting section 14, and in this case, autonomous travel of the rice transplanter 1 is permitted (treated as if no abnormality related to automatic planting has occurred).

When the autonomous travel control unit 71 determines that the above conditions for starting autonomous travel have been satisfied, it causes the rice transplanter 1 to start autonomous travel. After the autonomous travel control unit 71 starts the autonomous travel of the rice transplanter 1, the autonomous travel control unit 71 causes the rice transplanter 1 to travel autonomously along the travel path generated by the path generating unit 125.

When the autonomous travel control unit 71 turns the autonomous travel flag ON when the rice transplanter 1 is caused to start autonomous travel. The autonomous travel flag is data stored in the control unit 30, and represents whether the rice transplanter 1 is in autonomous travel or not. When the autonomous travel flag is ON, it means that the rice transplanter 1 is traveling autonomously, and when it is OFF, it means that the machine is not traveling autonomously.

The autonomous travel control is executed by the autonomous travel control unit 71 outputting a control signal to the steering controller 84 so that the rice transplanter 1 travels along the autonomous travel path 135, and the steering controller 84 controlling the steering angle based on the control signal.

While the autonomous travel control is being executed, the vehicle speed of the rice transplanter 1 is, in principle, indicated by manual operation by the user. Specifically, the vehicle speed during autonomous travel of the rice transplanter 1 is controlled by the vehicle speed controller 82 based on the operation of the acceleration pedal 27.

The autonomous travel control unit 71 monitors whether a predetermined autonomous travel end condition is satisfied during autonomous travel. There are various possibilities for autonomous travel end conditions, but for example, the wireless communication terminal 3 may instruct the rice transplanter 1 to end autonomous travel. The autonomous travel end condition is also satisfied when a situation arises in which continuation of autonomous travel is undesirable, such as when the steering operation flag is turned ON or when the rice transplanter 1 deviates from the autonomous travel path 135 by a predetermined deviation or more.

When the autonomous travel control unit 71 determines that the above-described autonomous travel end condition is satisfied, the autonomous travel of the rice transplanter 1 is ended. The method of ending autonomous travel changes depending on the situation. For example, in a case where the traveling of the rice transplanter 1 should be stopped immediately due to a communication cutoff of the wireless communication terminal 3, detection of an obstacle by an obstacle sensor (not shown), or the like, the autonomous travel control unit 71 controls the engine 22 to stop immediately and then ends the autonomous travel. On the other hand, if there is an instruction, or the like, to end the autonomous travel by the user, the autonomous travel control unit 71 ends the autonomous travel after the vehicle speed controller 82 performs deceleration control to smoothly decelerate the vehicle so that the vehicle speed becomes zero. After the autonomous travel control unit 71 ends the autonomous travel of the rice transplanter 1, the autonomous travel flag is turned OFF.

Next, autonomous control of the work section will be described.

The autonomous control of the work section is, as described above, a series of controls relating to the planting section 14 when the rice transplanter 1 is turned and driven between work. Whether or not this autonomous control of the work section is performed is determined according to the state of the autonomous control flag of the work section, which is data stored in the control unit 30. If the work section autonomous control flag is ON, the work section autonomous control is performed; if it is OFF, the work section autonomous control is not performed.

Generally, the state of the work section autonomous control flag can be switched by the user operating the work section autonomous control on/off switch 69 to turn it ON or OFF. However, the autonomous travel control unit 71 forcibly changes the automatic work section control flag to ON during autonomous travel of the rice transplanter 1, even if the work section autonomous control on/off switch 69 is in the OFF state. That is, while the rice transplanter 1 is traveling autonomously, the automatic work section control is executed regardless of whether the work section autonomous control on/off switch 69 is in the ON state or the OFF state.

Further, even if the work section autonomous control on/off switch 69 is switched to the OFF state after the work section autonomous control on/off switch 69 is in the ON state and autonomous travel of the rice transplanter 1 is started, the work section autonomous control flag remains ON.

The specific process will be described with reference to the flowchart in FIG. 6. When the process of FIG. 6 is started, the autonomous travel control unit 71 determines whether the rice transplanter 1 is currently in autonomous travel (step S101). This determination can be made based on the autonomous travel flag described above. If the rice transplanter 1 is in autonomous travel, the autonomous travel control unit 71 sets the work section autonomous control flag to ON (step S102). Thereafter, the process returns to step S101.

If it is determined in step S101 that the autonomous travel control unit 71 is not in an autonomous travel state, the autonomous travel control unit 71 controls whether the work section autonomous control on/off switch is in an ON state (step S103). If it is in the ON state, the autonomous travel control unit 71 sets the work section autonomous control flag to ON (step S102). Otherwise, the autonomous travel control unit 71 sets the work section autonomous control flag to OFF (step S104). In any case, the process returns to step S101.

Next, the actual autonomous control of the work section will be described with reference to the flowchart in FIG. 7.

The process in FIG. 7 is performed in parallel with the process in FIG. 6. When the process of FIG. 7 is started, the control unit 30 determines whether or not the work section autonomous control flag is ON (step S201). If the work section autonomous control flag is OFF, the process returns to step S201 (therefore steps S202 to S205 are not processed).

If it is determined in step S201 that the work section autonomous control flag is ON, the control unit 30 determines whether the rice transplanter 1 has started to turn (step S202). Although there are various methods of determining this, for example, it may be determined that turning has started when one of the side clutches 55L, 55R provided on the left and right rear wheels 13, 13 is disengaged. According to this determination method, the point at which the start of a turn is detected is, generally, point Q1 in FIG. 8.

If it is determined in step S202 that the rice transplanter 1 has started, the control unit 30 causes the work section controller 83 to raise the planting section 14 to the raised position and causes the steering controller 84 to set the planting clutch 63 to a disengaged state (step S203). The order of the time of the raising of the planting section 14 and the disengagement of the planting clutch 63 can be changed as needed. If it is determined in step S202, the rice transplanter 1 has not started to turn, the processing of step S203 is skipped.

Furthermore, the control unit 30 then determines whether the rice transplanter 1 has finished turning (step S204). Although there are various methods of determination, it is possible, for example, to determine that the turning is finished when the traveling distance during the turning exceeds a predetermined distance and when one of the side clutches 55L, 55R, which had been disengaged, is engaged. According to this determination method, the point at which the end of the turn is detected is generally point Q2 in FIG. 8.

If it is determined in step S204 that the rice transplanter 1 has finished turning, the control unit 30 causes the work section controller 83 to lower the planting section 14 to the lowered position and causes the steering controller 84 to set the planting clutch 63 to an engaged state (step S204). The order of the time of the lowering of the planting section 14 and the engagement of the planting clutch 63 can be changed as needed. If it is determined in step S204, the rice transplanter 1 has not finished turning, the processing of step S205 is skipped. Thereafter, the process returns to step S201.

Next, vehicle speed control, including automatic cruise control, will be described.

As described above, the automatic cruise control is a control in which the vehicle speed controller 82 maintains the traveling of the rice transplanter 1 at a speed corresponding to the operating position of the acceleration pedal 27 when the automatic cruise lever 68 was operated to the ON side in the past, even if no operating force is applied to the acceleration pedal 27. Whether the automatic cruise control is performed is determined according to the state of the speed-fixing flag, which is stored in the control unit 30. If the speed-fixing flag is ON, automatic cruise control is performed; if it is OFF, automatic cruise control is not performed.

In principle, the ON/OFF of the speed-fixing flag can be switched by the user operating the automatic cruise lever 68 to the ON or OFF side. However, even if the speed-fixing flag is ON, the autonomous travel control unit 71 forcibly changes the speed-fixing flag to OFF under predetermined conditions during autonomous travel of the rice transplanter 1, for example, when the machine is traveling on the turning path 137. Accordingly, when the rice transplanter 1 is autonomously traveling along the turning path 137 shown in FIG. 8, the automatic cruise control is prohibited. In the case where the rice transplanter 1 is traveling autonomously, the automatic cruise control is permitted only when the rice transplanter 1 is actually traveling on the work path 136.

Strictly speaking, when the rice transplanter 1 is autonomously traveling along the work path 136 on the left side of FIG. 8, the section where the autonomous travel control unit 71 permits the execution of the automatic cruise control is not the entire section from the starting point S1 to the end point E1 of the work path 136. The section where the automatic cruise control is permitted is in the interval from the starting point S1 of the work path 136 to an intermediate point near the end point E1 (a predetermined point a predetermined distance before the end point E1) P1. Between the intermediate point P1 and the end point E1 is a separation of a predetermined distance (first predetermined distance L1).

In the work path 136, the execution of the automatic cruise control is prohibited in the section from the intermediate point P1 to the end point E1. The execution of the automatic cruise control is also prohibited in all sections of the turning path 137. Thus, in the section immediately before the turn and in the section where the turn is made, the vehicle speed is controlled in accordance with the operating position of the acceleration pedal 27. Therefore, agile, careful and deliberate gearshift operation based on the user's judgment becomes possible.

However, among the work paths 136 and the turning paths 137 comprising the autonomous travel path 135 when the vehicle is traveling autonomously in the turning path 137. A predetermined upper limit is set with respect to the vehicle speed based on the operation amount of the acceleration pedal 27 during the autonomous travel. Accordingly, the rice transplanter 1 cannot autonomously travel the turning path 137 at a vehicle speed exceeding the upper vehicle speed limit regardless of the amount of operation of the acceleration pedal 27. As a result, the vehicle speed of the rice transplanter 1 is limited to less than the upper vehicle speed limit, so that safety and stability when riding can be achieved in a turn.

With respect to the vehicle speed when the rice transplanter 1 shifts from the turning path 137 to the work path 136 during autonomous travel, the present embodiment performs traction control.

For example, consider a case in which the user depresses the acceleration pedal 27 to the maximum extent while the rice transplanter 1 is traveling along the turning path 137. In the above-described control, the vehicle speed of the rice transplanter 1 traveling on the turning path 137 is set to a predetermined upper limit. Thereafter, consider a case in which the user maintains the operating position of the acceleration pedal 27 and the rice transplanter 1 shifts to the work path 136. At this time, if the upper limit of the vehicle speed is deactivated, there is a risk that the rice transplanter 1 may accelerate contrary to the user's intention.

In consideration of the above description, in the present embodiment, even when the rice transplanter 1 in autonomous travel ends traveling on the turning path 137 and starts traveling on the work path 136, the control of the upper limit of the vehicle speed performed on the turning path 137 is maintained (traction control) unless the user operates the operation amount of the acceleration pedal 27 to the deceleration side by a predetermined amount. This enhances the user's sense of security because acceleration is based on the explicit operation of the user releasing and again depressing the acceleration pedal 27.

The specific processing will be described with reference to the flowchart in FIG. 9. When the process of FIG. 9 is started, the control unit 30 determines whether the rice transplanter 1 is currently traveling autonomously (step S301).

If the rice transplanter 1 is not traveling autonomously, the control unit 30 determines whether the automatic cruise lever 68 has been operated to the OFF side (step S302). When the automatic cruise lever 68 is operated to the OFF side, if the speed-fixing flag is ON, the control unit 30 changes the speed-fixing flag to OFF (step S303). Thereafter, the processing returns to step S301.

In the step S302 described above, it is determined whether the operation of the automatic cruise lever 68 to the OFF side, as well as other operations (specifically, stepping on the acceleration pedal 27) automatically to end the automatic cruise control are determined. If the acceleration pedal 27 is depressed even if the automatic cruise lever 68 is not operated to the OFF side, the speed-fixing flag is changed from ON to OFF in step S303.

If it is determined in step S302, the automatic cruise lever 68 is not operated to the OFF side, the control unit 30 deter whether the automatic cruise lever 68 is operated in reverse to the ON side (step S304). If the automatic cruise lever 68 is operated to the ON side, the control unit 30 changes the speed-fixing flag to ON if it is OFF (step S305). If the automatic cruise lever 68 is not operated to the ON side, the process of step S305 is skipped. Thereafter, the processing returns to step S301.

If it is determined in step S301, the rice transplanter 1 is in autonomous travel, the autonomous travel control unit 71 determines whether the rice transplanter 1 is in the work path 136 (step S306). This determination can be made on the basis of the working center position of the planting section 14 calculated from the current position of the rice transplanter 1. If the rice transplanter 1 is not in the work path 136 (i.e., in the turning path 137), the autonomous travel control unit 71 turns the speed-fixing flag OFF if the flag is ON (step S303). Thereafter, the processing returns to step S301.

If it is determined in step 306 that the rice transplanter 1 is in the work path 136, the autonomous travel control unit 71 determines whether the rice transplanter 1 is in front of the above-described intermediate point P1 in the work path 136 (step S307). This determination can be made on the basis of the working center position of the planting section 14, described above. If the rice transplanter 1 is not in front of the point P1 (i.e., the rice transplanter 1 is traveling beyond the intermediate point P1), if the flag is ON the autonomous travel control unit 71 turns the speed-fixing flag OFF (step S303). Thereafter, the processing returns to step S301.

As shown in the flowchart of FIG. 9, when the rice transplanter 1 is autonomously traveling on the turning path 137 or is autonomously traveling on the side closer to the end point than the intermediate point P1 in the work path 136, the speed-fixing flag is turned OFF. As described above, the operation of the automatic cruise lever 68 to the ON side is disabled. This causes automatic cruise control to be prohibited.

Although omitted in FIG. 9, when the user instructs the autonomous travel to end by operating the wireless communication terminal 3, and the speed-fixing flag is changed to OFF if it is ON. This will cause the automatic cruise control to be automatically deactivated.

Next, the actual vehicle speed control will be described with reference to the flowchart in Fig. 10.

The process in FIG. 10 is executed in parallel with the process in FIG. 9. When the process of FIG. 10 is started, the control unit 30 determines whether the speed-fixing flag is ON (step S401).

If the speed-fixing flag is ON, the control unit 30 sets the target vehicle speed based on the amount of operation of the acceleration pedal 27 at the time when the automatic cruise lever 68 is operated to the ON side (step S402). Then, the control unit 30 (vehicle speed controller 82) controls the vehicle speed of the rice transplanter 1 so as to approach the target vehicle speed (step S403). Thereafter, the process returns to step S401.

If it is determined in step S401 that the speed-fixing flag is OFF, the control unit 30 sets a target vehicle speed based on the current operation amount of the acceleration pedal 27 (step S404).

Thereafter, the control unit 30 determines whether the rice transplanter 1 is currently traveling autonomously (step S405). If the autonomous travel is in progress, the autonomous travel control unit 71 changes the target vehicle speed to be the upper limit if the rice transplanter 1 is in the turning path 137 and the target vehicle speed set in step S404 exceeds the upper limit (step S406). This prevents the vehicle from turning at excessive speeds during autonomous travel. After the rice transplanter 1 has shifted from the turning path 137 to the work path 136, if the release of the stepping on the acceleration pedal 27 has not been performed and the target vehicle speed set in step S404 exceeds the upper limit value the autonomous travel control unit 71 changes the target vehicle speed to be the upper limit value (step S407). This achieves the traction control described above. If it is determined in step S405 that the rice transplanter 1 is not currently traveling autonomously, the processing of step S406 and step S407, described above, is skipped.

The control unit 30 then controls the vehicle speed of the rice transplanter 1 so as to approach the target vehicle speed (step S403). Thereafter, the process returns to step S401.

Next the informing control will be described.

In this embodiment, during autonomous travel, when the position of the rice transplanter 1 (the central working position of the planting section 14) reaches a point R1 slightly before the end point E 1 of the work path 136, a warning is made to inform that it is just before the shift to traveling on the turning path 137. The informing may be performed, for example, by a lamp display or sound. The informing of the user may be performed on the rice transplanter 1 side or on the wireless communication terminal 3 side. Thus, since the user is able to know that the direction of travel of the rice transplanter 1 will soon be changed, the user can prepare for the swaying and the like, associated with the turning of the rice transplanter 1, by sitting deep in the driver's seat 25, or the like. Since this informing control can be realized by a simple process of monitoring the current position of the rice transplanter 1, a flowchart is omitted.

Next, by way of example, how the control described above causes the rice transplanter 1 to operate during autonomous travel will be described.

After the user gets on the stopped rice transplanter 1, the user instructs the rice transplanter 1 to start autonomous travel by operating the wireless communication terminal 3. In the present description, the work section autonomous control on/off switch 69 of the rice transplanter 1 is in the OFF state at the time when the start of autonomous travel is instructed. The depression of the acceleration pedal 27 is released, and the automatic cruise lever 68 does not cause an ON operation of automatic cruise control.

Based on the instruction described above, the autonomous travel of the rice transplanter 1 is started. Initially, since the speed-fixing flag is OFF, movement of the rice transplanter 1 is predominantly initiated by the user depressing the acceleration pedal 27.

By the way, the position of the rice transplanter 1 (strictly speaking, the position of the working center of the planting section 14), when the user instructs the start of autonomous travel, does not necessarily coincide with the position of the starting point of the above-mentioned path to start autonomous travel. Accordingly, before traveling along the above-described autonomous travel path 135, the autonomous travel control unit 71 causes the rice transplanter 1 to travel by automatic steering so that the position of the working center of the planting section 14 coincides with the scheduled start point of autonomous travel along the autonomous travel path 135 (previous travel).

Here, if autonomous travel can be started while the machine is traveling under automatic cruise control, for example, there is a risk that the rice transplanter 1 will turn at a high speed and change its course at the moment the user instructs the rice transplanter 1 to start autonomous travel. However, in the present embodiment, as described above, autonomous travel by the autonomous travel control unit 71 is not started if the automatic cruise control by the vehicle speed controller 82 is not released. Accordingly, the vehicle speed of the rice transplanter 1 in the previous travel described above will always follow the user's operation of the acceleration pedal 27. As a result, the user can instruct the rice transplanter 1 to start autonomous travel with confidence.

After the rice transplanter 1 has been moved to a predetermined position by previous travel, the rice transplanter 1 travels according to the autonomous travel path 135 shown in FIG. 5. Specifically, the autonomous travel control unit 71 performs automatic steering to achieve traveling along the autonomous travel path 135. The vehicle speed of the rice transplanter 1 at this time is controlled to be a vehicle speed corresponding to the amount by which the user depresses the acceleration pedal 27. When the rice transplanter 1 is traveling along the work path 136, the planting section 14 is in the lowered position and the planting clutch 63 is connected, so that the seedling planting operation is performed.

Consider the case where the rice transplanter 1 is in the position shown in FIG. 8, for example, and the user depresses the acceleration pedal 27 by a desired amount and operates the automatic cruise lever 68 to the ON side. In this case, the speed-fixing flag is changed from OFF to ON. Thereafter, even if the user releases the operating force to the acceleration pedal 27, the vehicle speed controller 82 controls the traveling speed of the rice transplanter 1 (automatic cruise control) to maintain the vehicle speed at the time when the automatic cruise lever 68 is operated to the ON side.

Thereafter, when the rice transplanter 1 traveling along the work path 136 approaches a predetermined intermediate point P1, the automatic cruise control is prohibited and the speed-fixing flag is automatically changed from ON to OFF. As a result, the vehicle speed of the rice transplanter 1 is controlled so that the vehicle speed is in accordance with the currently depressed amount of the acceleration pedal 27. During automatic cruise control, the user does not depress the acceleration pedal 27. Accordingly, by changing the speed-fixing flag from ON to OFF, the vehicle speed controller 82 controls the rice transplanter 1 to start decelerating from the point P1 described above. If the acceleration pedal 27 is still not depressed, the rice transplanter 1 stops at a point (for example, point R1) a short distance after point P1. Although the position of the stopping point varies depending on the vehicle speed during the automatic cruise control, the position of the point P1 at which the automatic cruise control is prohibited is set so that the stopping point is before the end point E1 of the work path 136 even when the automatic cruise control is performed at the highest vehicle speed.

The user then depresses the acceleration pedal 27 by the desired amount. This causes the rice transplanter 1 to start traveling again. Immediately, the rice transplanter 1 shifts from the work path 136 to the turning path 137.

Although the work section autonomous control on/off switch 69 is in the OFF state as described above, the work section autonomous control flag is forcibly turned ON during autonomous travel. Accordingly, in the turning path 137, the work section autonomous control is performed. Specifically, when the rice transplanter 1 reaches a point Q1 at which the side clutch 55R on the inside of the turn becomes disengaged, the planting section 14 rises to the up position and the planting clutch 63 becomes disengaged. Thereafter, when the rice transplanter 1 reaches the point Q2 at which the side clutch on the inside of the turn (in the case of FIG. 8, the side clutch 55R) becomes connected, the planting section 14 is lowered to the lowering position and the planting clutch 63 becomes engaged.

When a user desires autonomous travel of the rice transplanter 1 along the autonomous travel path 135, it is considered that the user usually also desires control of the raising and lowering of the planting section 14 during turning between work and desires control of the engagement and disengagement of the planting clutch 63 Accordingly, the work section autonomous control can be performed even when the work section autonomous control on/off switch 69 is in the OFF state, thereby reducing the user's time and effort.

However, the user may wish, for some reason, to switch from autonomous travel to manual travel in the middle of traveling. In this case, for example, autonomous travel is automatically activated by the user operating the steering handle 26 by hand. Accordingly, the forcing of the work section autonomous control flag ON is deactivated, and thereafter the state of the work section autonomous control flag follows the state of the work section autonomous control on/off switch 69 operated by the user. Therefore, after the autonomous travel is deactivated, the user's intention can be reliably reflected with respect to whether or not to execute the autonomous control of the work section.

When the rice transplanter 1 is traveling on the turning path 137, the automatic cruise control is prohibited. Accordingly, even if the user were to operate the automatic cruise lever 68 to the ON side, automatic cruise control would not be performed in the turning path 137. As a result, during autonomous travel on the turning path 137, the vehicle speed of the rice transplanter 1 is controlled based on the amount by which the user actually depresses the acceleration pedal 27. Even if the user depresses the acceleration pedal 27 significantly, the upper limit control of the vehicle speed, described above, prevents the rice transplanter 1 from traveling in a turn at an excessive speed.

Thereafter, the rice transplanter 1 shifts to the work path 136. If the rice transplanter 1 enters the work path 136 from the turning path 137 at a speed higher than or equal to the predetermined speed, the upper limit control of the vehicle speed is not released even in the work path 136 unless the user returns the depression of the acceleration pedal 27 at least to some extent (the traction control described above). To deactivate the traction control, the user relaxes the depression of the acceleration pedal 27 and then depresses it again. Thus, the rice transplanter 1 is able to travel at a speed greater than the upper speed limit described above in the work path 136. Since automatic cruise control is again permitted in the work path 136, the user can initiate automatic cruise control by the automatic cruise lever 68, as described above.

At a point P2 prior to the end of the automatic cruise control at a point P1 during automatic cruise control as described above, an informing control may warn that the automatic cruise control will be ending. Between the point P1, at which the automatic cruise control ends ,and the point P2, at which the warning is given, is a separation of an appropriate distance (second predetermined distance L2). Upon receiving this warning, by quickly terminating the automatic cruise control (specifically, depressing the acceleration pedal 27) the user is capable of shifting the rice transplanter 1 from the work path 136 to the turning path 137 without stopping the rice transplanter 1. As a result, work by autonomous travel can be performed smoothly. In the case where the rice transplanter 1 does not stop but enters the turning path 137 from the work path 136, the above-described informing control that gives a warning to that effect immediately before the shift to the turning path 137 is more suitable.

As described above, the autonomous travel system of the rice transplanter 1 of the present embodiment includes an autonomous travel control unit 71. The autonomous travel control unit 71, using a positioning system, is capable of causing autonomous traveling of the rice transplanter 1 along an autonomous travel path 135 having a plurality of work paths 136 along which planting work is performed by the planting section 14 and a turning path 137 connecting adjacent work paths 136 among the plurality of work paths. The rice transplanter 1 includes a vehicle speed controller 82 that controls the vehicle speed of the rice transplanter 1, and an acceleration pedal 27 that operates the vehicle speed of the rice transplanter 1. The vehicle speed controller 82 is capable of executing an automatic cruise control that maintains the vehicle speed of the rice transplanter 1 corresponding to the operating position of the acceleration pedal 27 before release, even if the operating force to the acceleration pedal 27 is released. The autonomous travel control unit 71 permits the automatic cruise control by the vehicle speed controller 82 when the rice transplanter 1 is autonomously traveling along the work path 136, while it prohibits the automatic cruise control by the vehicle speed controller 82 when the rice transplanter 1 is autonomously traveling along the turning path 137.

As a result, the execution of the automatic cruise control is prohibited when the rice transplanter 1 is autonomously traveling on the turning path 137, so that the user themself determines the vehicle speed as appropriate when the rice transplanter 1 is turning. Therefore, careful and deliberate turning can be ensured. In addition, since the rice transplanter 1 generally does not perform planting work when traveling along a turning path, a decrease in productivity can be avoided.

In the autonomous travel system of the rice transplanter 1 of the present embodiment, the autonomous travel control unit 71 prohibits the automatic cruise control by the controller 82, in a section from the point P1 a first predetermined distance L1 before an end point E1 of the work path 136 to the end point E1, even when the rice transplanter 1 is autonomously traveling along the work path 136.

When the rice transplanter 1 is traveling along the work path 136, since the automatic cruise control is prohibited from the point P1 where the remaining distance to the turning path 137 becomes short, the user manually determines the vehicle speed in from the stage before reaching the turning path 137. Accordingly, the user's sense of security, when the rice transplanter 1 turns in the turning path 137, is improved.

In the autonomous travel system of the rice transplanter 1 of the present embodiment, when the rice transplanter 1 is autonomously traveling along the work path 136 with the automatic cruise control in a state of being executed, by the vehicle speed controller 82 and when the position of the rice transplanter 1 reaches the point P1 described above, the autonomous travel control unit 71 controls the vehicle speed controller 82 causing the rice transplanter 1 to decelerate and then stop.

When the autonomously traveling rice transplanter 1 reaches a predetermined point P1, the automatic cruise control is deactivated. By controlling the deceleration of the rice transplanter 1 at this time, for example, a sudden stop can be avoided and the stability when riding can be improved.

In the autonomous travel system of the rice transplanter 1 of the present embodiment, the autonomous travel control unit 71 is capable of causing the rice transplanter 1 to start autonomous travel along the work path 136 when the autonomous travel start condition is satisfied. The condition for starting autonomous travel include the fact that automatic cruise control is not being executed by the vehicle speed controller 82.

If autonomous travel is allowed to start autonomous travel during the execution of the automatic cruise control, the rice transplanter 1 may change its course at a high speed depending on the positional relationship between the current position of the rice transplanter 1 and the scheduled start point of autonomous travel along the autonomous travel path 135. By prohibiting the start of autonomous travel during the execution of the automatic cruise control, the rice transplanter 1 can move to the scheduled point described above while reliably following the user's instructions for the vehicle speed.

The autonomous travel system of the rice transplanter 1 of the present embodiment is also provided with an autonomous travel operation unit 123. The autonomous travel operation unit 123 commands the autonomous travel control unit 71 to start and to end the autonomous travel of the rice transplanter 1. When the autonomous travel control unit 71 in the state where the automatic cruise control by the vehicle speed controller 82 is in a state of being executed and the rice transplanter 1 is autonomously traveling along the work path 136, and when the autonomous travel operation unit 123 is operated and a command to end the autonomous travel is given to the autonomous travel control unit 71, the vehicle speed controller 82 is controlled to decelerate the rice transplanter 1 and then to stop.

If the user instructs termination of the autonomous travel in the work path 136 while executing the automatic cruise control, and if the automatic cruise control is maintained, the rice transplanter 1 may proceed to a point that the user does not intend. In this regard, the configuration of the present embodiment causes the rice transplanter 1 to stop at a position close to the position at the time when the user instructs the end of the autonomous travel.

In the autonomous travel system of the rice transplanter 1 of the present embodiment, the autonomous travel control unit 71 controls the vehicle speed controller 82 to limit the vehicle speed of the rice transplanter 1 to a predetermined upper vehicle speed limit or less, regardless of the operation amount of the acceleration pedal 27, when the rice transplanter 1 is traveling autonomously along the turning path 137.

Because an upper limit is set for the vehicle speed of the rice transplanter 1 on the turning path 137 in autonomous travel, the stability when riding can be improved.

In the autonomous travel system of the rice transplanter 1 of the present embodiment, the autonomous travel control unit 71 prevents the acceleration of the rice transplanter 1 by the vehicle speed controller 82 until a predetermined condition is satisfied when the path for autonomously traveling the rice transplanter 1 shifts from the turning path 137 to the work path 136. This predetermined condition is to operate the acceleration pedal 27 to the deceleration side.

When the autonomously traveling rice transplanter 1 shifts from the turning path 137 to the work path 136, if the upper limit of the vehicle speed applied in the turning path 137 is deactivated, the rice transplanter 1 may accelerate against the user's intention. In this regard, according to the configuration of the present embodiment, in order for the rice transplanter 1 that has shifted to the work path 136 to accelerate, it is necessary to explicitly operate the acceleration pedal 27 once to the deceleration side and then to the acceleration side (by releasing slightly and then depressing the acceleration pedal 27 with the foot.) Therefore, the user can have a high sense of security regarding acceleration.

Although preferred embodiments of the present invention have been described, the configurations as described above can be modified as stated below, for example.

In the present embodiment, the engaged state/disengaged state of the left side clutch 55L or the right side clutch 55R is switched for turning of the rice transplanter 1. Such switching may be performed in conjunction with the operation of the steering handle 26, or may be performed based on the detection result of a steering angle sensor provided in the rice transplanter 1.

The wireless communication terminal 3 can be removed from the rice transplanter 1, and the operator can operate the wireless communication terminal 3 without riding the rice transplanter 1 to make the unmanned rice transplanter 1 perform autonomous travel.

The rice transplanter 1A may have a function equivalent to the wireless communication terminal 3. In this case, the autonomous travel system of the work vehicle can be realized by the rice transplanter 1 even without the wireless communication terminal 3.

Considering the above-described instructions it is clear that the present invention can take many changes and modifications. Therefore, it should be understood that the present invention may be practiced in a manner other than that described herein as long as being within the scope of the appended claims.

### DESCRIPTION OF REFERENCE NUMERALS

1 Rice transplanter (work vehicle)
14 Planting section (work section)
27 Acceleration pedal (vehicle speed operation unit)
82 Vehicle speed controller (vehicle speed control unit)
71 Autonomous travel control unit
123 Autonomous travel operation unit
135 Travel path
136 Work path
137 Turning path
E1 End point

## Claims

1. An autonomous travel system for a work vehicle (1) comprising,
an autonomous travel control unit (71) that, using a positioning system, is capable of causing autonomous traveling of the work vehicle (1) along a travel path (135) having a plurality of work paths (136) along which work is performed by a work section and a turning path (137) connecting adjacent work paths among the plurality of work paths (136), wherein
the work vehicle (1) includes a vehicle speed control unit (82) that controls a vehicle speed of the work vehicle (1) and a vehicle speed operation unit (27) that performs operations on the vehicle speed of the work vehicle (1), **characterized in that**
the vehicle speed control unit (82) is capable of executing a vehicle speed maintenance control that, even after release of an operation force on the vehicle speed operation unit (27), maintains the vehicle speed of the work vehicle (1) corresponding to an operating position of the vehicle speed operation unit (27) before the release, and
the autonomous travel control unit (71) permits the vehicle speed maintenance control by the vehicle speed control unit (82) when the work vehicle (1) is caused to autonomously travel along the work path (136), and prohibits the vehicle speed maintenance control by the vehicle speed control unit (82) when the work vehicle (1) is caused to autonomously travel along the turning path (137).

2. The autonomous travel system for a work vehicle (1) according to claim 1, wherein
the autonomous travel control unit (71) prohibits the vehicle speed maintenance control by the vehicle speed control unit (82) in a section from a predetermined point a predetermined distance before an end point of the work path (136) to the end point, even when the work vehicle (1) is caused to autonomously travel along the work path (136).

3. The autonomous travel system for a work vehicle according to claim 2, wherein
while the vehicle speed maintenance control is in a state of being executed by the vehicle speed control unit (82), and when the work vehicle (1) is caused to autonomously travel along the work path (136), the autonomous travel control unit (71) controls the vehicle speed control unit (82) to cause the work vehicle (1) to decelerate and afterwards to stop when a position of the work vehicle (1) reaches the predetermined point.

4. The autonomous travel system for a work vehicle (1) according to any one of claims 1 to 3, wherein
the autonomous travel control unit (71) is capable of causing the work vehicle (1) to start autonomously travelling along the work path (136) when an autonomous travel start condition is satisfied,
the autonomous travel start condition includes the vehicle speed maintenance control not being performed by the vehicle speed control unit (82).

5. The autonomous travel system for a work vehicle according to any one of claims 1 to 4, comprising
an autonomous travel operation unit (123) capable of commanding a start and a termination of autonomous travel of the work vehicle (1) to the autonomous travel control unit (71), wherein
while the vehicle speed maintenance control is in a state of being executed by the vehicle speed control unit (82), and when the work vehicle (1) is caused to autonomously travel along the work path (136), the autonomous travel control unit (71) controls the vehicle speed control unit (82) to cause the work vehicle (1) to decelerate and afterwards to stop when the autonomous travel operation unit (123) is operated to give a command to terminate the autonomous travel to the autonomous travel control unit (71).

6. The autonomous travel system for a work vehicle (1) according to any one of claims 1 to 5, wherein
the autonomous travel control unit (71) controls the vehicle speed control unit (82) to limit the vehicle speed of the work vehicle (1) to a predetermined upper vehicle speed limit or less when the work vehicle (1) is caused to autonomously travel along the turning path (137) regardless of an operation amount of the vehicle speed operation unit (27).

7. The autonomous travel system for a work vehicle (1) according to claim 6, wherein
when the work vehicle (1) autonomously traveling along the turning path (137) has switched to the work path (136), the autonomous travel control unit (71) prevents acceleration of the work vehicle (1) by the vehicle speed control unit (82) until a predetermined condition is satisfied, and
the predetermined condition is the vehicle speed operation unit (27) being operated to a deceleration-side.

## Patentansprüche

1. Autonomes Fahrsystem für ein Arbeitsfahrzeug (1), umfassend:
eine autonome Fahrsteuereinheit (71), die unter Verwendung eines Positionierungssystems in der Lage ist das autonome Fahren des Arbeitsfahrzeugs (1) entlang eines Fahrpfades (135) zu veranlassen, der eine Vielzahl von Arbeitspfaden (136), entlang derer Arbeit mittels eines Arbeitsabschnitts durchgeführt wird, und einen Abzweigungspfad (137), der angrenzende Arbeitspfade aus der Vielzahl von Arbeitspfaden (136) verbindet, aufweist, wobei
das Arbeitsfahrzeug (1) eine Fahrzeuggeschwindigkeits-Steuereinheit (82), die eine Fahrzeuggeschwindigkeit des Arbeitsfahrzeugs (1) steuert, und eine Fahrzeuggeschwindigkeits-Bedieneinheit (27), die Bedienungen an der Fahrzeuggeschwindigkeit des Arbeitsfahrzeugs (1) durchführt, beinhaltet, **gekennzeichnet dadurch, dass**
die Fahrzeuggeschwindigkeits-Steuereinheit (82) in der Lage ist, eine Fahrzeuggeschwindigkeits-Aufrechterhaltungssteuerung auszuführen, die auch nach Freisetzung einer Bedienkraft auf die Fahrzeuggeschwindigkeits-Bedieneinheit (27) die Fahrzeuggeschwindigkeit des Arbeitsfahrzeugs (1) entsprechend einer Bedienposition der Fahrzeuggeschwindigkeits-Bedieneinheit (27) vor der Freisetzung aufrechterhält, und
die autonome Fahrsteuereinheit (71) die Fahrzeuggeschwindigkeits-Auftrechterhaltungssteuerung durch die Fahrzeuggeschwindigkeits-Steuereinheit (82) ermöglicht, wenn das Arbeitsfahrzeug (1) veranlasst wird, autonom entlang des Arbeitspfades (136) zu fahren, und die Fahrzeuggeschwindigkeits-Aufrechterhaltungssteuerung durch die Fahrzeuggeschwindigkeits-Steuereinheit (82) unterbindet, wenn das Arbeitsfahrzeug (1) veranlasst wird, autonom entlang eines Abzweigungspfades (137) zu fahren.

2. Autonomes Fahrsystem für ein Arbeitsfahrzeug (1) nach Anspruch 1, wobei
die autonome Fahrsteuereinheit (71) die Fahrzeuggeschwindigkeits-Aufrechterhaltungssteuerung durch die Fahrzeuggeschwindigkeits-Steuereinheit (82) in einem Abschnitt von einem vorherbestimmten Punkt über einen vorherbestimmten Abstand vor einem Endpunkt des Arbeitspfades (136) zu dem Endpunkt unterbindet, auch wenn das Arbeitsfahrzeug (1) veranlasst wird, autonom entlang des Arbeitspfades (136) zu fahren.

3. Autonomes Fahrsystem für ein Arbeitsfahrzeug nach Anspruch 2, wobei
während die Fahrzeuggeschwindigkeits-Aufrechterhaltungssteuerung in einem Zustand ist, wo sie durch die Fahrzeuggeschwindigkeits-Steuereinheit (82) ausgeführt wird, und wenn das Arbeitsfahrzeug (1) veranlasst wird, autonom entlang des Arbeitspfades (136) zu fahren, die autonome Fahrsteuereinheit (71) die Fahrzeuggeschwindigkeits-Steuereinheit (82) dazu steuert, das Arbeitsfahrzeug (1) zu veranlassen, sich zu verlangsamen und danach anzuhalten, wenn eine Position des Arbeitsfahrzeugs (1) den vorherbestimmten Punkt erreicht.

4. Autonomes Fahrsystem für ein Arbeitsfahrzeug (1) nach einem der Ansprüche 1 bis 3, wobei
die autonome Fahrsteuereinheit (71) in der Lage ist, das Arbeitsfahrzeug (1) zu veranlassen, das autonome Fahren entlang des Arbeitspfades (136) zu starten, wenn eine Startbedingung für autonomes Fahren erfüllt ist,
die Startbedingung für autonomes Fahren beinhaltet, dass die Fahrzeuggeschwindigkeits-Aufrechterhaltungssteuerung nicht von der Fahrzeuggeschwindigkeits-Steuereinheit (82) durchgeführt wird.

5. Autonomes Fahrsystem für ein Arbeitsfahrzeug nach einem der Ansprüche 1 bis 4, umfassend
eine autonome Fahrbedieneinheit (123), die in der Lage ist, die autonome Fahrsteuereinheit (71) über einen Start und eine Beendigung einer autonomen Fahrt des Arbeitsfahrzeugs (1) anzuweisen, wobei
während die Fahrzeuggeschwindigkeits-Aufrechterhaltungssteuerung in einem Zustand ist, wo sie durch die Fahrzeuggeschwindigkeits-Steuereinheit (82) ausgeführt wird, und wenn das Arbeitsfahrzeug (1) veranlasst wird, autonom entlang des Arbeitspfades (136) zu fahren, die autonome Fahrsteuereinheit (71) die Fahrzeuggeschwindigkeits-Steuereinheit (82) dazu steuert, das Arbeitsfahrzeug (1) zu veranlassen, sich zu verlangsamen und danach anzuhalten, wenn die autonome Fahrbedieneinheit (123) dazu bedient wird, eine Anweisung zum Beenden der autonomen Fahrt an die autonome Fahrsteuereinheit (71) zu geben.

6. Autonomes Fahrsystem für ein Arbeitsfahrzeug (1) nach einem der Ansprüche 1 bis 5, wobei
die autonome Fahrsteuereinheit (71) die Fahrzeuggeschwindigkeits-Steuereinheit (82) dazu steuert, die Fahrzeuggeschwindigkeit des Arbeitsfahrzeugs (1) auf eine vorherbestimmte obere Fahrzeuggeschwindigkeitsbegrenzung oder darunter zu begrenzen, wenn das Arbeitsfahrzeug (1) veranlasst wird, autonom entlang des Abzweigungspfades (137) zu fahren, ungeachtet eines Bedienbetrags der Fahrzeuggeschwindigkeits-Bedieneinheit (27).

7. Autonomes Fahrsystem für ein Arbeitsfahrzeug (1) nach Anspruch 6, wobei
wenn das Arbeitsfahrzeug (1), das autonom entlang des Abzweigungspfades (137) fährt, auf den Arbeitspfad (136) gewechselt hat, die autonome Fahrsteuereinheit (71) eine Beschleunigung des Arbeitsfahrzeugs (1) durch die Fahrzeuggeschwindigkeits-Steuereinheit (82) verhindert, bis eine vorherbestimmte Bedingung erfüllt ist, und
die vorherbestimmte Bedingung ist, dass die Fahrzeuggeschwindigkeits-Bedieneinheit (27) zu einer Verlangsamungsseite hin bedient wird.

## Revendications

1. Système de déplacement autonome pour un véhicule de travail (1) comprenant :
une unité de commande de déplacement autonome (71) qui, à l'aide d'un système de positionnement, est apte à entraîner un déplacement autonome du véhicule de travail (1) le long d'un trajet de déplacement (135) présentant une pluralité de trajets de travail (136) le long desquels un travail est réalisé par une section de travail et un trajet de virage (137) reliant des trajets de travail adjacents parmi la pluralité de trajets de travail (136), dans lequel
le véhicule de travail (1) inclut une unité de commande de vitesse de véhicule (82) qui commande une vitesse de véhicule du véhicule de travail (1) et une unité d'actionnement de vitesse de véhicule (27) qui réalise des actions sur la vitesse de véhicule du véhicule de travail (1), **caractérisé en ce que**
l'unité de commande de vitesse de véhicule (82) est apte à exécuter une commande de maintien de vitesse de véhicule qui, même après libération d'une force d'actionnement sur l'unité d'actionnement de vitesse de véhicule (27), maintient la vitesse de véhicule du véhicule de travail (1) correspondant à une position de fonctionnement de l'unité d'actionnement de vitesse de véhicule (27) avant la libération, et
l'unité de commande de déplacement autonome (71) autorise la commande de maintien de vitesse de véhicule par l'unité de commande de vitesse de véhicule (82) lorsque le véhicule de travail (1) est amené à se déplacer de manière autonome le long du trajet de travail (136), et interdit la commande de maintien de vitesse de véhicule par l'unité de commande de vitesse de véhicule (82) lorsque le véhicule de travail (1) est amené à se déplacer de manière autonome le long du trajet de virage (137).

2. Système de déplacement autonome pour un véhicule de travail (1) selon la revendication 1, dans lequel
l'unité de commande de déplacement autonome (71) interdit la commande de maintien de vitesse de véhicule par l'unité de commande de vitesse de véhicule (82) dans une section allant d'un point prédéterminé à une distance prédéterminée avant un point final du trajet de travail (136) jusqu'au point final, même lorsque le véhicule de travail (1) est amené à se déplacer de manière autonome le long du trajet de travail (136).

3. Système de déplacement autonome pour un véhicule de travail selon la revendication 2, dans lequel
alors que la commande de maintien de vitesse de véhicule est dans un état d'exécution par l'unité de commande de vitesse de véhicule (82), et lorsque le véhicule de travail (1) est amené à se déplacer de manière autonome le long du trajet de travail (136), l'unité de commande de déplacement autonome (71) commande à l'unité de commande de vitesse de véhicule (82) d'amener le véhicule de travail (1) à décélérer et ensuite à s'arrêter lorsqu'une position du véhicule de travail (1) atteint le point prédéterminé.

4. Système de déplacement autonome pour un véhicule de travail (1) selon l'une quelconque des revendications 1 à 3, dans lequel
l'unité de commande de déplacement autonome (71) est apte à amener le véhicule de travail (1) à commencer à se déplacer de manière autonome le long du trajet de travail (136) lorsqu'une condition de début de déplacement autonome est satisfaite,
la condition de début de déplacement autonome inclut la non-réalisation de la commande de maintien de vitesse de véhicule par l'unité de commande de vitesse de véhicule (82).

5. Système de déplacement autonome pour un véhicule de travail selon l'une quelconque des revendications 1 à 4, comprenant
une unité d'actionnement de déplacement autonome (123) apte à ordonner un début et une fin de déplacement autonome du véhicule de travail (1) à l'unité de commande de déplacement autonome (71), dans lequel
alors que la commande de maintien de vitesse de véhicule est dans un état d'exécution par l'unité de commande de vitesse de véhicule (82), et lorsque le véhicule de travail (1) est amené à se déplacer de manière autonome le long du trajet de travail (136), l'unité de commande de déplacement autonome (71) commande à l'unité de commande de vitesse de véhicule (82) d'amener le véhicule de travail (1) à décélérer et ensuite à s'arrêter lorsque l'unité d'actionnement de déplacement autonome (123) est actionnée pour ordonner à l'unité de commande de déplacement autonome (71) de mettre fin au déplacement autonome.

6. Système de déplacement autonome pour un véhicule de travail (1) selon l'une quelconque des revendications 1 à 5, dans lequel
l'unité de commande de déplacement autonome (71) commande à l'unité de commande de vitesse de véhicule (82) de limiter la vitesse de véhicule du véhicule de travail (1) à une limite de vitesse de véhicule supérieure prédéterminée ou moins lorsque le véhicule de travail (1) est amené à se déplacer de manière autonome le long du trajet de virage (137) indépendamment d'une quantité d'actionnement de l'unité d'actionnement de vitesse de véhicule (27).

7. Système de déplacement autonome pour un véhicule de travail (1) selon la revendication 6, dans lequel
lorsque le véhicule de travail (1) se déplaçant de manière autonome le long du trajet de virage (137) est passé sur le trajet de travail (136), l'unité de commande de déplacement autonome (71) empêche l'accélération du véhicule de travail (1) par l'unité de commande de vitesse de véhicule (82) jusqu'à ce qu'une condition prédéterminée soit satisfaite, et
la condition prédéterminée est que l'unité d'actionnement de vitesse de véhicule (27) soit actionnée vers un côté décélération.
